# EUROPEAN PATENT APPLICATION

(11) **EP 4 425 586 A1**
(43) Date of publication of application: **04.09.2024**
(21) Application number: 23866593.9
(22) Date of filing: 17.01.2023
(51) Int. Cl.: H01M 4/02, H01M 4/13, H01M 10/0585

(54) **ELECTRODE ASSEMBLY, BATTERY CELL, BATTERY, AND ELECTRICAL DEVICE**

(71) Applicant: Contemporary Amperex Technology Co., Limited, Ningde City, Fujian PRC 352100 (CN)
(72) Inventor: WU, Kai, Ningde Fujian 352100 (CN); XUE, Qingrui, Ningde Fujian 352100 (CN); LI, Wei, Ningde Fujian 352100 (CN); ZHANG, Zige, Ningde Fujian 352100 (CN); ZHANG, Yu, Ningde Fujian 352100 (CN); ZHAO, Zhengyuan, Ningde Fujian 352100 (CN)
(74) Representative: Gong, Jinping
(86) International application number: PCT/CN2023/072572
(87) International publication number: WO 2024/152189

(57) **Abstract**

Embodiments of this application provide an electrode assembly, a battery cell, a battery, and an electric device. The electrode assembly includes a negative electrode plate, a positive electrode plate, and a separator stacked along a first direction, the separator being used to separate the positive electrode plate and the negative electrode plate; where in a second direction, size of the negative electrode plate is larger than size of the positive electrode plate, and an orthographic projection of the positive electrode plate on a plane in which a surface of the negative electrode plate is located does not extend beyond the negative electrode plate, where the second direction is a width direction of the negative electrode plate, and the first direction is perpendicular to the second direction; and in the first direction, burrs on a negative electrode current collector of the negative electrode plate have a size of L1, a negative electrode active substance layer of the negative electrode plate has a size of L2, and the separator has a size of L3, and in the second direction, a difference is L4 between a minimum distance from a middle position of the negative electrode plate to an end of the negative electrode plate and a minimum distance from a middle position of the positive electrode plate to an end of the positive electrode plate; where L 1, L2, L3, and L4 satisfy L1 ≤ L2 + L3 + L4. The technical solution of this application can reduce the risk of short circuit in the battery.

## Description

### TECHNICAL FIELD

This application relates to the field of battery technologies, and in particular to an electrode assembly, a battery cell, a battery, and an electric device.

### BACKGROUND

Energy conservation and emission reduction are crucial to sustainable development of the automobile industry. In this context, electric vehicles, with their advantages in energy conservation and environmental protection, have become an important part of sustainable development of the automobile industry. For electric vehicles, battery technology is an important factor in connection with their development.

In the development of battery technology, in addition to performance improvement, short circuit is another non-negligible issue of batteries. The short circuit issue of a battery affects the use of the battery. Therefore, how the risk of short circuit of a battery is an urgent technical problem that needs to be solved in battery technology.

### SUMMARY

Embodiments of this application provide an electrode assembly, a battery cell, a battery, and an electric device, so as to reduce the risk of short circuit in a battery.

According to a first aspect, an electrode assembly is provided, including a negative electrode plate, a positive electrode plate, and a separator, where the negative electrode plate, the positive electrode plate, and the separator are stacked along a first direction, and the separator is used to separate the positive electrode plate and the negative electrode plate; where in a second direction, size of the negative electrode plate is larger than size of the positive electrode plate, and an orthographic projection of the positive electrode plate on a plane in which a surface of the negative electrode plate is located does not extend beyond the negative electrode plate, where the second direction is a width direction of the negative electrode plate, and the first direction is perpendicular to the second direction; and in the first direction, burrs on a negative electrode current collector of the negative electrode plate have a size of L1, a negative electrode active substance layer of the negative electrode plate has a size of L2, and the separator has a size of L3, and in the second direction, a difference is L4 between a minimum distance from a middle position of the negative electrode plate to an end of the negative electrode plate and a minimum distance from a middle position of the positive electrode plate to an end of the positive electrode plate; where L1, L2, L3, and L4 satisfy L1 ≤ L2 + L3 + L4.

In an embodiment of this application, the negative electrode plate, the positive electrode plate, and the separator are stacked along the first direction, and in the second direction perpendicular to the first direction, the size of the negative electrode plate is larger than the size of the positive electrode plate, and the orthographic projection of the positive electrode plate on the plane in which a surface of the negative electrode plate is located does not extend beyond the negative electrode plate. This ensures that the lithium released from the positive electrode plate can be all intercalated in the negative electrode plate, preventing lithium precipitation of the negative electrode plate and avoiding short circuit in the battery. In addition, L1, L2, L3, and L4 satisfy L1 ≤ L2 + L3 + L4, where in the second direction, L4 is the difference between a minimum distance from a middle position of the negative electrode plate to an end of the negative electrode plate and a minimum distance from a middle position of the positive electrode plate to an end of the positive electrode plate, L1 is the size of burrs on the negative electrode current collector of the negative electrode plate in the first direction, L2 is the size of the negative electrode active substance layer of the negative electrode plate in the first direction, and L3 is the size of the separator in the first direction. The positive electrode plate, the negative electrode plate, and the separator being designed according to the dimensional relationship between L1, L2, L3, and L4 can reduce the possibility of burrs at the edge of the negative electrode current collector lapping with the positive electrode plate, thereby reducing the risk of short circuit in the battery. In other words, the technical solution of this application, while avoiding lithium precipitation of the negative electrode plate, also reduces the risk of the burrs on the negative electrode current collector lapping with the positive electrode plate, thereby reducing the risk of short circuit in the battery.

In one possible implementation, L2 is 25 µm to 200 µm.

The performance of the battery is related to the capacity of the negative electrode active substance layer, that is, related to the thickness of the negative electrode active substance layer. If the negative electrode active substance layer is too thin, fewer lithium-ion pores are provided, and the negative electrode plate is prone to lithium precipitation, which leads to short circuit in the battery. If the negative electrode active substance layer is too thick, the size of the negative electrode plate is increased, increasing the volume of the battery. In addition, excessive negative electrode active substance also results in material waste, increasing production costs. Therefore, the size L2 of the negative electrode active substance layer of the negative electrode plate in the first direction is set to 25 µm to 200 µm.

In one possible implementation, L3 ≥ 5 µm.

The main function of the separator is to separate the positive electrode plate and the negative electrode plate of the battery to prevent contact between the two electrodes and avoid short circuit. If the separator is too thin and prone to damage, there is a risk of contact between the positive electrode plate and the negative electrode plate. Therefore, the size L3 of the separator in the first direction is set to be ≥5µm to reduce the risk of short circuit in the battery.

In one possible implementation, L4 ≥ 300 µm.

In the second direction, the minimum distance from the middle position of the negative electrode plate to an end of the negative electrode plate is set to be greater than the minimum distance from the middle position of the positive electrode plate to an end of the positive electrode plate. This is to ensure that the lithium released from the positive electrode plate can be all intercalated into the negative electrode plate, preventing lithium precipitation of the negative electrode plate. If the difference L4 between the two is set to be too small, the lithium released from the positive electrode plate may not be all intercalated into the negative electrode plate, and there is a risk of lithium precipitation of the negative electrode plate, which affects the safety of the battery. Therefore, L4 ≥ 300 µm is set to avoid lithium precipitation of the negative electrode plate, so as to reduce the risk of short circuit in the battery.

In one possible implementation, L1 ≤ 330 µm.

The size of burrs on the negative electrode current collector of the negative electrode plate is set in relation to L2, L3, and L4. To reduce the possibility of the burrs on the negative electrode current collector lapping with the positive electrode plate, L1 ≤ 330 µm is set so as to reduce the risk of short circuit in the battery.

In one possible implementation, in the first direction, burrs on a positive electrode current collector of the positive electrode plate have a size of L5 satisfying L5 < L3 + L6; where L6 represents size of a positive electrode active substance layer of the positive electrode plate in the first direction.

In the second direction, the minimum distance from the middle position of the negative electrode plate to an end of the negative electrode plate is greater than the minimum distance from the middle position of the positive electrode plate to an end of the positive electrode plate, and therefore the minimum size requirement for the burrs on the positive electrode current collector to lap onto the negative electrode plate is that in the first direction x, the size L5 of the burrs on the positive electrode current collector is equal to a sum of the size L6 of the positive electrode active substance layer and the size L3 of the separator. Therefore, under a condition that L5 satisfies L5 < L3 + L6, it is less likely that the burrs on the positive electrode current collector lap with the negative electrode plate, reducing the risk of short circuit in the battery.

In one possible implementation, L6 is 25 µm to 200 µm.

The performance of the battery is related to the capacity of the positive electrode active substance layer, that is, related to the thickness of the positive electrode active substance layer. If the positive electrode active substance layer is too thin, fewer lithium ions are provided, and accordingly the capacity of the battery is small. If the positive electrode active substance layer is too thick, the size of the positive electrode plate is increased, increasing the volume of the battery. In addition, excessive positive electrode active substance leads to lithium precipitation of the negative electrode plate, affecting the safety of the battery. Therefore, the size L6 of the positive electrode active substance layer of the positive electrode plate in the first direction is set to 25 µm to 200 µm.

In one possible implementation, L5 < 30 µm.

The size of the burrs on the positive electrode current collector of the positive electrode plate is set in relation to L3 and L6. To reduce the possibility of the burrs on the positive electrode current collector lapping with the negative electrode plate, L5 < 30 µm is set so as to reduce the risk of short circuit in the battery.

In one possible implementation, in the first direction, the positive electrode plate has a size L7 of 70 µm to 400 µm.

Considering the size settings of the positive electrode active substance layer of the positive electrode plate and the separator, the overall size L7 of the positive electrode plate in the first direction is set to be 70 µm to 400 µm, balancing the performance requirements of the battery and the size settings of the battery.

In one possible implementation, in the first direction, the negative electrode plate has a size L8 of 70 µm to 400 µm.

Considering the size settings of the negative electrode active substance layer of the negative electrode plate and the separator, the overall size L8 of the negative electrode plate in the first direction is set to be 70 µm to 400 µm, balancing the performance requirements of the battery and the size settings of the battery.

In one possible implementation, the positive electrode current collector of the positive electrode plate includes a first support layer and a first metal layer disposed on surface of the first support layer, where a surface of the first metal layer away from the first support layer is covered with the positive electrode active substance layer.

A composite substrate is used as the positive electrode current collector. Thickness of a metal layer of the composite substrate is 10% to 40% of thickness of a metal layer of a pure metal substrate. As a result, size of burrs on the composite substrate positive electrode current collector is only 10% to 40% of size of burrs on a pure metal substrate positive electrode current collector, reducing the risk of the burrs on the positive electrode current collector lapping with the negative electrode plate. In addition, conductive resistance of the burrs on the composite substrate positive electrode current collector is 2.5 to 10 times conductive resistance of burrs on the pure metal substrate positive electrode current collector, and heat generated due to the burrs on the composite substrate positive electrode current collector lapping with the negative electrode plate is 10% to 40% of heat generated due to burrs on the pure metal substrate positive electrode current collector lapping with the negative electrode plate, reducing the risk of thermal runaway in the battery.

In one possible implementation, the negative electrode current collector includes a second support layer and a second metal layer disposed on surface of the second support layer, where a surface of the second metal layer away from the second support layer is covered with the negative electrode active substance layer.

A composite substrate is used as the negative electrode current collector. Thickness of a metal layer of the composite substrate negative electrode current collector is 10% to 40% of thickness of a metal layer of a pure metal substrate negative electrode current collector. As a result, size of burrs on the composite substrate negative electrode current collector is only 10% to 40% of size of burrs on the pure metal substrate negative electrode current collector, reducing the risk of the burrs on the negative electrode current collector lapping with the positive electrode plate. In addition, conductive resistance of the burrs on the composite substrate negative electrode current collector is 2.5 to 10 times conductive resistance of burrs on the pure metal substrate negative electrode current collector, and heat generated due to the burrs on the composite substrate negative electrode current collector lapping with the positive electrode plate is 10% to 40% of heat generated due to burrs on the pure metal substrate negative electrode current collector lapping with the positive electrode plate, reducing the risk of thermal runaway in the battery.

According to a second aspect, a battery cell is provided, including the electrode assembly according to the first aspect or any possible implementation of the first aspect, a housing having an opening for accommodating the electrode assembly, and an end cover for closing the opening.

According to a third aspect, a battery is provided, including: the battery cell according to the second aspect or any possible implementation of the second aspect.

According to a fourth aspect, an electric device is provided, including the battery according to the third aspect or any possible implementation of the third aspect, where the battery is configured to supply electrical energy.

In the technical solution of this application, a negative electrode plate, a positive electrode plate, and a separator are stacked along a first direction, and in a second direction perpendicular to the first direction, size of the negative electrode plate is larger than size of the positive electrode plate, and an orthographic projection of the positive electrode plate on a plane in which a surface of the negative electrode plate is located does not extend beyond the negative electrode plate. This ensures that the lithium released from the positive electrode plate can be all intercalated in the negative electrode plate, preventing lithium precipitation of the negative electrode plate and avoiding short circuit in the battery. In addition, L1, L2, L3, and L4 satisfy L1 ≤ L2 + L3 + L4, where in the second direction, L4 is the difference between a minimum distance from a middle position of the negative electrode plate to an end of the negative electrode plate and a minimum distance from a middle position of the positive electrode plate to an end of the positive electrode plate, L1 is the size of burrs on the negative electrode current collector of the negative electrode plate in the first direction, L2 is the size of the negative electrode active substance layer of the negative electrode plate in the first direction, and L3 is the size of the separator in the first direction. The positive electrode plate, the negative electrode plate, and the separator being designed according to the dimensional relationship between L1, L2, L3, and L4 can reduce the possibility of burrs at the edge of the negative electrode current collector lapping with the positive electrode plate, thereby reducing the risk of short circuit in the battery. In other words, the technical solution of this application, while avoiding lithium precipitation of the negative electrode plate, also reduces the risk of the burrs on the negative electrode current collector lapping with the positive electrode plate, thereby reducing the risk of short circuit in the battery.

### BRIEF DESCRIPTION OF DRAWINGS

To describe the technical solutions of the embodiments of this application more clearly, the following briefly describes the accompanying drawings required for describing the embodiments of this application. Apparently, the accompanying drawings described below show merely some embodiments of this application, and persons of ordinary skill in the art may still derive other drawings from the accompanying drawings without creative efforts.
FIG. 1 is a schematic structural diagram of a vehicle according to an embodiment of this application;
FIG. 2 is a schematic structural exploded view of a battery according to an embodiment of this application;
FIG. 3 is a schematic structural exploded view of a battery cell according to an embodiment of this application;
FIG. 4 is a schematic structural exploded view of an electrode assembly according to an embodiment of this application;
FIG. 5 is a schematic structural exploded view of an electrode assembly according to an embodiment of this application;
FIG. 6 is a schematic structural diagram of a positive electrode plate according to an embodiment of this application; and
FIG. 7 is a schematic structural diagram of a negative electrode plate according to an embodiment of this application.

The accompanying drawings are not drawn to scale.

### DESCRIPTION OF EMBODIMENTS

The following further describes the implementations of this application in detail with reference to the accompanying drawings and embodiments. The detailed description of embodiments and the accompanying drawings are intended to illustrate the principle of this application, rather than to limit the scope of this application, meaning this application is not limited to the embodiments described herein.

In the description of this application, it should be noted that, unless otherwise stated, "multiple" means at least two; and the orientations or positional relationships indicated by the terms "upper", "lower", "left", "right", "inside", "outside", and the like are merely for ease and brevity of description of this application rather than indicating or implying that the means or components mentioned must have specific orientations or must be constructed or manipulated according to particular orientations. These terms shall therefore not be construed as limitations on this application. In addition, the terms "first", "second", "third", and the like are merely for the purpose of description and shall not be understood as any indication or implication of relative importance. "Perpendicular" is not perpendicular in the strict sense but within an allowable range of error. "Parallel" is not parallel in the strict sense but within an allowable range of error.

The orientation terms appearing in the following description all are directions shown in the figures, and do not limit the specific structure of the application. In the description of this application, it should also be noted that unless otherwise specified and defined explicitly, the terms "mount", "connect", and "join" should be understood in their general senses. For example, they may refer to a fixed connection, a detachable connection, or an integral connection, and may refer to a direct connection or an indirect connection via an intermediate medium. Persons of ordinary skill in the art can understand specific meanings of these terms in this application as appropriate to specific situations.

The term "and/or" in this application is only an associative relationship for describing associated objects, indicating that three relationships may be present. For example, A and/or B may indicate three cases: presence of only A; presence of both A and B; and presence of only B. In addition, the character "/" in this application generally indicates an "or" relationship between contextually associated objects.

Unless otherwise defined, all technical and scientific terms used in this application shall have the same meanings as commonly understood by those skilled in the art to which this application relates. The terms used in the specification of this application are intended to merely describe the specific embodiments rather than to limit this application. The terms "include", "comprise", and any variations thereof in the specification and claims of this application as well as the foregoing description of drawings are intended to cover non-exclusive inclusions. In the specification, claims, or accompanying drawings of this application, the terms "first", "second", and the like are intended to distinguish between different objects rather than to indicate a particular order or relative importance.

Reference to "embodiment" in this application means that specific features, structures, or characteristics described with reference to the embodiment may be included in at least one embodiment of this application. The word "embodiment" appearing in various places in the specification does not necessarily refer to the same embodiment or an independent or alternative embodiment that is exclusive of other embodiments. It is explicitly or implicitly understood by persons skilled in the art that the embodiments described herein may be combined with other embodiments.

In the embodiments of this application, the battery cell may include a lithium-ion secondary battery, a lithium-ion primary battery, a lithium-sulfur battery, a sodium-lithium-ion battery, a sodium-ion battery, a magnesium-ion battery, or the like. This is not limited in the embodiments of this application. The battery cell may be cylindrical, flat, cuboid, or of other shapes, which is not limited in the embodiments of this application either. Battery cells are typically divided into three types by packaging method: cylindrical cell, prismatic cell, and pouch cell. The type of battery is not limited in the embodiments of this application either.

The battery mentioned in the embodiments of this application is a single physical module that includes one or more battery cells for providing a higher voltage and capacity. For example, the battery mentioned in this application may include a battery module, a battery pack, or the like. A battery typically includes a box configured to enclose one or more battery cells. The box can prevent liquids or other foreign matter from affecting charging or discharging of the battery cell.

The battery cell may include an electrode assembly and an electrolyte. The electrode assembly includes a positive electrode plate, a negative electrode plate, and a separator. The battery cell mainly relies on movement of metal ions between a positive electrode plate and a negative electrode plate to work. The positive electrode plate includes a positive electrode current collector and a positive electrode active substance layer. The positive electrode active substance layer is applied on a surface of the positive electrode current collector, and a current collector uncoated with the positive electrode active substance layer protrudes from the current collector coated with the positive electrode active substance layer and serves as a positive electrode tab. A lithium-ion battery is used as an example, for which, the positive electrode current collector may be made of aluminum and the positive electrode active substance may be lithium cobaltate, lithium iron phosphate, ternary lithium, lithium manganate, or the like. The negative electrode plate includes a negative electrode current collector and a negative electrode active substance layer. The negative electrode active substance layer is coated on a surface of the negative electrode current collector. A current collector uncoated with the negative electrode active substance layer protrudes from the current collector coated with the negative electrode active substance layer and serves as a negative electrode tab. The negative electrode current collector may be made of copper, and the negative electrode active substance may be graphite, carbon, silicon, or the like. To allow a large current to pass through without any fusing, multiple positive electrode tabs are provided and stacked together, and multiple negative electrode tabs are provided and stacked together. The separator may be made of polypropylene (polypropylene, PP), polyethylene (polyethylene, PE), or the like. In addition, the electrode assembly may be a wound structure or a laminated structure. However, the embodiments of this application are not limited thereto.

Currently, from a perspective of the market development, application of traction batteries is becoming more extensive. Traction batteries have been not only used in energy storage power supply systems such as hydroelectric power plants, thermal power plants, wind power plants, and solar power plants, but also widely used in many other fields including electric transportation tools such as electric bicycles, electric motorcycles, and electric vehicles, military equipment, and aerospace. With continuous expansion of application fields of traction batteries, market demands for the traction batteries are also expanding.

For the development of battery technologies, many design factors need to be considered, for example, performance parameters such as energy density, cycle life, discharge capacity, and charge and discharge rate, as well as safety of the battery. For example, during the use of a battery, there is an excess of lithium ions at a positive electrode plate and an insufficient number of lithium ion vacancies at a negative electrode plate. This leads to lithium precipitation of the negative electrode plate and the occurrence of short circuit in the battery. To address the issue of lithium precipitation of the negative electrode plate, an overhang design is employed for the positive electrode plate and the negative electrode plate. In this design, when the negative electrode plate and the positive electrode plate are stacked, both ends of the negative electrode plate extend beyond the positive electrode plate, ensuring that the negative electrode plate has sufficient lithium ion vacancies to accommodate lithium ions released from the positive electrode plate.

However, after the overhang design is employed for the positive electrode plate and the negative electrode plate, burrs on right-angled edges of a negative electrode current collector of the negative electrode plate easily lap with the positive electrode plate, and burrs on right-angled edges of a positive electrode current collector of the positive electrode plate easily lap with the negative electrode plate, resulting in short circuit in the battery and affecting the safety of the battery.

In view of this, embodiments of this application provide an electrode assembly, the electrode assembly including a negative electrode plate, a positive electrode plate, and a separator. The negative electrode plate, the positive electrode plate, and the separator are stacked along a first direction, and in a second direction perpendicular to the first direction, size of the negative electrode plate is larger than size of the positive electrode plate, and an orthographic projection of the positive electrode plate on a plane in which a surface of the negative electrode plate is located does not extend beyond the negative electrode plate. This ensures that the lithium released from the positive electrode plate can be all intercalated in the negative electrode plate, preventing lithium precipitation of the negative electrode plate and avoiding short circuit in the battery. Further, L1, L2, L3, and L4 satisfy L1 ≤ L2 + L3 + L4, where in the second direction, L4 is a difference between a minimum distance from a middle position of the negative electrode plate to an end of the negative electrode plate and a minimum distance from a middle position of the positive electrode plate to an end of the positive electrode plate, L1 is size of burrs on a negative electrode current collector of the negative electrode plate in the first direction, L2 is size of a negative electrode active substance layer of the negative electrode plate in the first direction, and L3 is size of the separator in the first direction. In this application, the positive electrode plate, the negative electrode plate, and the separator being designed according to the dimensional relationship between L1, L2, L3, and L4 can reduce the possibility of burrs at the edge of the negative electrode current collector lapping with the positive electrode plate, thereby reducing the risk of short circuit in the battery. In other words, the technical solution of this application, while avoiding lithium precipitation of the negative electrode plate, also reduces the risk of the burrs on the negative electrode current collector lapping with the positive electrode plate, thereby reducing the risk of short circuit in the battery.

The technical solutions described in the embodiments of this application are applicable to various apparatuses that use batteries, for example, mobile phones, portable devices, notebook computers, electric bicycles, electric toys, electric tools, electric vehicles, ships, and spacecrafts. For example, spacecrafts include airplanes, rockets, space shuttles, and spaceships.

It should be understood that the technical solutions described in the embodiments of this application are not only applicable to the devices described above, but also applicable to all devices using batteries. However, for brevity of description, in the following embodiments, the electric vehicle is used as an example for description.

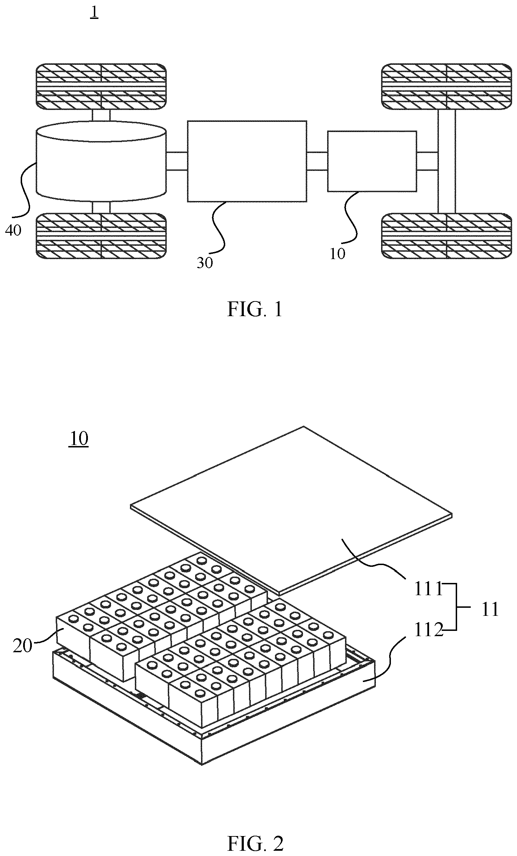

For example, FIG. 1 is a schematic structural diagram of a vehicle 1 according to an embodiment of this application. The vehicle 1 may be a fossil fuel vehicle, a natural-gas vehicle, or a new energy vehicle, where the new energy vehicle may be a battery electric vehicle, a hybrid electric vehicle, a range-extended vehicle, or the like. A motor 40, a controller 30, and a battery 10 may be provided inside the vehicle 1, where the controller 30 is configured to control the battery 10 to supply power to the motor 40. For example, the battery 10 may be provided at the bottom, front, or rear of the vehicle 1. The battery 10 may be configured to supply power to the vehicle 1. For example, the battery 10 may be used as an operational power source for the vehicle 1 that is configured for a circuit system of the vehicle 1, for example, to satisfy power needs of start, navigation, and running of the vehicle 1. In another embodiment of this application, the battery 10 can be used as not only the operational power source for the vehicle 1, but also as a driving power source for the vehicle 1, replacing or partially replacing fossil fuel or natural gas to provide driving traction for the vehicle 1.

To meet different requirements for power use, the battery 10 may include a plurality of battery cells. For example, FIG. 2 is a schematic structural exploded view of the battery 10 according to an embodiment of this application. The battery 10 may include a plurality of battery cells 20. Based on different power demands, battery cells 20 can be set in any quantity. The multiple battery cells 20 may be connected in series, parallel, or series-parallel to achieve greater capacity or power. Because the quantity of battery cells 20 included in each battery 10 may be large, for ease of installation, the battery cells 20 may be arranged in groups, and each group of battery cells 20 forms a battery module. The number of battery cells 20 included in the battery module is not limited, and may be set according to requirements. The batteries may include a plurality of battery modules, which may be connected in series, parallel or mixed.

Optionally, the battery 10 may further include other structures. For example, the battery 10 may further include a busbar, where the busbar is configured to implement an electrical connection among multiple battery cells 20, for example, a parallel connection, a series connection, or a series-parallel connection. Specifically, the busbar may implement the electrical connection among the battery cells 20 by connecting electrode terminals of the battery cells 20. Further, the busbar may be fixed to the electrode terminal of the battery cell 20 by welding. Electrical energy of the plurality of battery cells 20 may be further led out through a conductive mechanism that passes through the box. Optionally, the conductive mechanism may also belong to the busbar.

The battery 10 may further include a box 11 (or referred to as a cover), where the box 11 has a hollow structure inside, and the plurality of battery cells 20 are accommodated in the box 11. As shown in FIG. 2, the box 11 may include two portions: an upper box body 111 and a lower box body 112. The upper box body 111 and the lower box body 112 are snap-fitted together. Shapes of the upper box body 111 and the lower box body 112 may be determined based on a shape of the plurality of combined battery cells 20, and at least one of the upper box body 111 and the lower box body 112 has an opening. For example, only one of the upper box body 111 and the lower box body 112 of the box 11 is a hollow cuboid with an opening, and the other is plate-shaped for covering the opening. For example, as shown in FIG. 2, the lower box body 112 is a hollow cuboid and has only one face with an opening and the upper box body 111 is plate-shaped. In such case, the upper box body 111 covers the opening of the lower box body 112 to form the box 11 with an enclosed chamber. The chamber may be configured to accommodate the multiple battery cells 20.

Optionally, the upper box body 111 and the lower box body 112 of the box 11 in this embodiment of this application may be in other shapes. For example, the upper box body 111 and the lower box body 112 each may be a hollow cuboid and have only one face with an opening, where the opening of the upper box body 111 is disposed opposite the opening of the lower box body 112, and the upper box body 111 and the lower box body 112 are snap-fitted to form the box 11 with an enclosed chamber. The multiple battery cells 20 are connected in parallel, in series, or in series-parallel, and then placed into the box formed after the upper box body 111 and the lower box body 112 are snap-fitted.

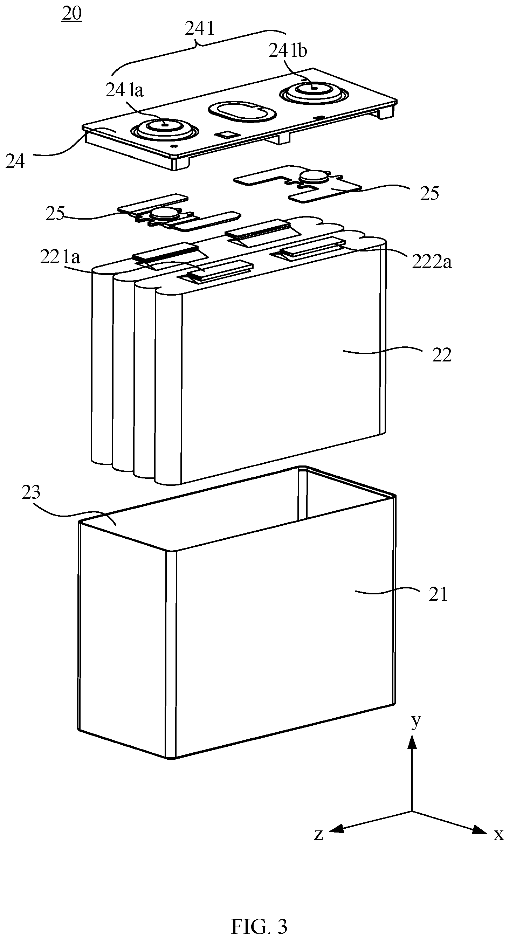

FIG. 3 is a schematic structural diagram of a battery cell 20 according to an embodiment of this application. The battery cell 20 includes one or more electrode assemblies 22, a housing 21, and an end cover 24. The housing 21 and the end cover 24 form a housing or battery case. The wall of the housing 21 as well as the end cover 24 are referred to as the walls of the battery cell 20. For a rectangular-type battery cell 20, the walls of the housing 21 include a bottom wall and four side walls, where the bottom wall and the four side walls are connected to form an accommodating space 23 for placing the electrode assembly 22. The shape of the housing 21 depends on a combined shape of the one or more electrode assemblies 22. For example, the housing 21 may be a hollow cuboid, a cube, or a cylinder, and one surface of the housing 21 has an opening for placing the one or more electrode assemblies 22 into the housing 21. For example, when the housing 21 is a hollow cuboid or cube, one face of the housing 21 is an opening face, which means that the face has no wall so that the inside and the outside of the housing 21 are communicated. When the housing 21 is a hollow cylinder, the end face of the housing 21 is an opening face, which means that the end face has no wall so that the inside and the outside of the housing 21 are communicated. The end cover 24 covers the opening of the accommodating space 23 and is connected to the housing 21 to form an enclosed cavity in which the electrode assembly 22 is placed. The housing 21 is filled with an electrolyte such as a liquid electrolyte.

The battery cell 20 may further include two electrode terminals 241 and the two electrode terminals 241 may be disposed on the end cover 24. The end cover 24 is generally in a shape of a flat plate, and two electrode terminals 241 are fixed on a flat surface of the end cover 24. The two electrode terminals 241 are a positive electrode terminal 241a and a negative electrode terminal 241b respectively. Each electrode terminal 241 is provided with a corresponding connecting member 25 or a current collection member. The current connecting member is located between the end cover 24 and the electrode assembly 22 and is configured to electrically connect the electrode assembly 22 to the electrode terminal 241.

As shown in FIG. 3, each electrode assembly 22 has a first tab 221a and a second tab 222a. The first tab 221a and the second tab 222a have opposite polarities. For example, when the first tab 221a is a positive electrode tab, the second tab 222a is a negative electrode tab. The first tabs 221a of the one or more electrode assemblies 22 are connected to one electrode terminal through one connecting member 25, and the second tabs 222a of the one or more electrode assemblies 22 are connected to the other electrode terminal through the other connecting member 25. For example, the positive electrode terminal 241a is connected to the positive electrode tab through one connecting member 25, and the negative electrode terminal 241b is connected to the negative electrode tab through the other connecting member 25.

In the battery cell 20, one or more electrode assemblies 22 may be provided depending on actual use demands. As shown in FIG. 3, the battery cell 20 is provided with four independent electrode assemblies 22.

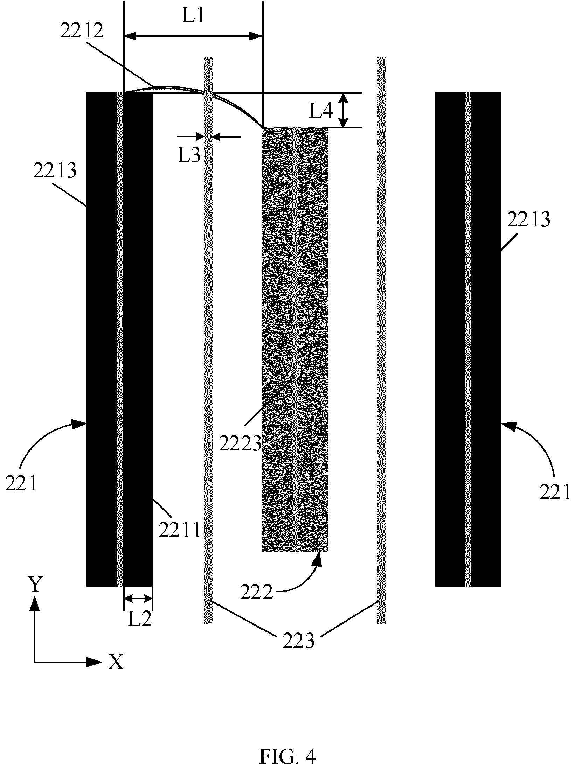

FIG. 4 is a schematic structural exploded view of an electrode assembly 22 according to an embodiment of this application. As shown in FIG. 4, the electrode assembly 22 includes a negative electrode plate 221, a positive electrode plate 222, and a separator 223.

Specifically, the negative electrode plate 221, the positive electrode plate 222, and the separator 223 are stacked along the first direction x. The separator 223 is provided between the positive electrode plate 222 and the negative electrode plate 221 to separate the positive electrode plate 222 and the negative electrode plate 221. In the second direction y, size of the negative electrode plate 221 is larger than size of the positive electrode plate 222, and an orthographic projection of the positive electrode plate 222 on a plane in which a surface of the negative electrode plate 221 is located does not extend beyond the negative electrode plate 221. The second direction y is a width direction of the negative electrode plate 221, or the second direction y is a width direction of the positive electrode plate 222 or the separator 223, and the first direction x is perpendicular to the second direction y, where the first direction x is a thickness direction of the negative electrode plate 221. That is, the negative electrode plate 221, the positive electrode plate 222, and the separator 223 are stacked along their thickness directions.

The negative electrode plate 221 includes a negative electrode current collector and a negative electrode active substance layer provided on the negative electrode current collector. The negative electrode active substance layer may include a carbon material, such as graphite, soft carbon (such as coke), and hard carbon, or may include a non-carbon material, such as nitride, PAS, tin-based oxides, tin alloys, nano-negative electrode materials, and some other intermetallic compounds. The negative electrode current collector collects the current generated by a negative electrode active substance in the negative electrode active substance layer to form a larger current for external output. Therefore, the negative electrode current collector should have sufficient contact with the negative electrode active substance, and it is preferable for the internal resistance to be as small as possible.

The positive electrode plate 222 includes a positive electrode current collector and a positive electrode active substance layer disposed on the positive electrode current collector. The positive electrode active substance layer may include a lithium-nickel oxide, a lithium-cobalt oxide, a lithium-titanium oxide, a nickel-cobalt polyoxide, a lithium-manganese oxide, a lithium-iron-phosphorus oxide, and the like. The positive electrode current collector collects the current generated by a positive electrode active substance in the positive electrode active substance layer to form a larger current for external output. Therefore, the positive electrode current collector should have sufficient contact with the positive electrode active substance, and it is preferable for the internal resistance to be as small as possible.

In the structure of the battery 10, the separator 223 is one of the key inner components. The performance of the separator 223 determines the interface structure and internal resistance of the battery 10, and directly affects the capacity, cycling performance, safety performance and other characteristics of the battery 10. The separator 223 with excellent performance plays an important role in improving the overall performance of the battery 10. The main function of the separator 223 is to separate the positive electrode plate 222 and the negative electrode plate 221 of the battery 10, to prevent contact between the two electrodes while such contact causes short circuit. In addition, the separator 223 further has the function of allowing electrolyte ions to pass through. The material of the separator 223 is non-conductive, and its physical and chemical properties have a great influence on the performance of the battery 10. Different types of batteries 10 use different separators 223. For example, in lithium batteries 10, since the electrolyte is an organic solvent system, a separator material resistant to organic solvents is needed and typically uses a highstrength and thin polyolefin porous film.

During the production process of battery 10, metal burrs inevitably exist on the current collector of the electrode plate, which can affect the performance of the battery 10. To ensure the performance and safety of use of the battery 10, during production of the electrode plate, sizes of the metal burrs are controlled through instrument measurement based on the overall quality requirements of the electrode assembly. This is to prevent the metal burrs from affecting the performance of the battery 10.

As shown in FIG. 4, in the first direction x, burrs 2212 on a negative electrode current collector 2213 of the negative electrode plate 221 have a size of L1, a negative electrode active substance layer 2211 of the negative electrode plate 221 has a size of L2, and the separator 223 has a size of L3, and in the second direction y, a difference is L4 between a minimum distance from a middle position of the negative electrode plate 221 to an end of the negative electrode plate 221 and a minimum distance from a middle position of the positive electrode plate 222 to an end of the positive electrode plate 222; where L1, L2, L3, and L4 satisfy L1 ≤ L2 + L3 + L4.

The size L1 of the burrs 2212 on the negative electrode current collector 2213 of the negative electrode plate 221 in the first direction x is the size of the burrs 2212 on the negative electrode current collector 2213 that extend along the first direction x without bending. In the battery 10, the burrs 2212 on the negative electrode current collector 2213 may deform and bend, thereby piercing through the separator 223 to lap to the positive electrode plate 222. With the size settings of the positive electrode plate 222, the negative electrode plate 221, and the separator 223 set, the minimum size required for the burr 2212 on the negative electrode current collector 2213 to lap onto the positive electrode plate 222 is that size of a portion of the burr 2212 on the negative electrode current collector 2213 that is parallel to the first direction x is L2 + L3, and that size of a curved portion of the burr 2212 on the negative electrode current collector 2213 is larger than L4 (under a condition that the curved portion is parallel to the second direction y, that is, the burr 2212 on the negative electrode current collector 2213 is in the shape of a right angle, the size of the curved portion of the burr 2212 on the negative electrode current collector 2213 is the same as L4, and the burr 2212 on the negative electrode current collector 2213 may be in contact with the positive electrode plate 222.) Therefore, under a condition that L1, L2, L3, and L4 satisfy L1 ≤ L2 + L3 + L4, the burrs 2212 on the negative electrode current collector 2213 do not lap with the positive electrode plate 222, or the possibility of the burrs 2212 of the negative electrode current collector 2213 lapping with the positive electrode plate 222 is reduced, thus the risk of short circuit in the battery 10 is reduced.

Specifically, the burrs 2212 on the negative electrode current collector 2213 may be measured by means of manual inspection or machine-assisted inspection. For example, the burrs 2212 on the negative electrode current collector 2213 may be measured using an image measuring instrument. Specifically, first, an image of the negative electrode plate 221 under detection is obtained; then based on the image information, coordinates of a point where the negative electrode current collector 2213 is connected to the burr 2212 on the negative electrode current collector 2213 are obtained, as well as coordinates of an end of the burr 2212 on the negative electrode current collector 2213 away from the negative electrode current collector 2213; and then the size of the burr 2212 on the negative electrode current collector 2213 is calculated based on the position information of the two coordinate points and the shape trajectory information of the burr 2212 on the negative electrode current collector 2213.

In this embodiment of this application, the negative electrode plate 221, the positive electrode plate 222, and the separator 223 are stacked along the first direction x, and in the second direction y perpendicular to the first direction x, the size of the negative electrode plate 221 is larger than the size of the positive electrode plate 222, and the orthographic projection of the positive electrode plate 222 on the plane in which a surface of the negative electrode plate 221 is located does not extend beyond the negative electrode plate 221. This ensures that the lithium released from the positive electrode plate 222 can be all intercalated in the negative electrode plate 221, preventing lithium precipitation of the negative electrode plate 221 and avoiding short circuit in the battery 10. In addition, L1, L2, L3, and L4 satisfy L1 ≤ L2 + L3 + L4, where in the second direction y, L4 is the difference between a minimum distance from a middle position of the negative electrode plate 221 to an end of the negative electrode plate 221 and a minimum distance from a middle position of the positive electrode plate 222 to an end of the positive electrode plate 222, L1 is the size of burrs 2212 on the negative electrode current collector 2213 of the negative electrode plate 221 in the first direction x, L2 is the size of the negative electrode active substance layer 2211 of the negative electrode plate 221 in the first direction x, and L3 is the size of the separator 223 in the first direction x. The positive electrode plate 222, the negative electrode plate 221, and the separator 223 being designed according to the dimensional relationship between L1, L2, L3, and L4 can reduce the possibility of burrs 2212 at the edge of the negative electrode current collector 2213 lapping with the positive electrode plate 222, thereby reducing the risk of short circuit in the battery 10. In other words, the technical solution of this application, while avoiding lithium precipitation of the negative electrode plate 221, also reduces the risk of the burrs 2212 on the negative electrode current collector 2213 lapping with the positive electrode plate 222, thereby reducing the risk of short circuit in the battery 10.

Optionally, in an embodiment of this application, L2 is 25 µm to 200 µm.

The performance of the battery 10 is related to the capacity of the negative electrode active substance layer 2211, that is, related to the thickness of the negative electrode active substance layer 2211. If the negative electrode active substance layer 2211 is too thin, fewer lithium-ion pores are provided, and the negative electrode plate 221 is prone to lithium precipitation, which leads to short circuit in the battery 10. If the negative electrode active substance layer 2211 is too thick, the size of the negative electrode plate 221 is increased, increasing the volume of the battery 10. In addition, excessive negative electrode active substance also results in material waste, increasing production costs. Therefore, the size L2 of the negative electrode active substance layer 2211 of the negative electrode plate 221 in the first direction x is set to 25 µm to 200 µm.

Optionally, in an embodiment of this application, L3 ≥ 5 µm.

The main function of the separator 223 is to separate the positive electrode plate 222 and the negative electrode plate 221 of the battery 10 to prevent contact between the two electrodes while such contact causes short circuit. If the separator 223 is too thin and prone to damage, there is a risk of contact between the positive electrode plate 222 and negative electrode plate 221. Therefore, the size L3 of the separator 223 in the first direction x is set to be ≥ 5µm to reduce the risk of short circuit in the battery 10.

Optionally, in an embodiment of this application, L4 ≥ 300 µm.

In the second direction y, the minimum distance from the middle position of the negative electrode plate 221 to an end of the negative electrode plate 221 is set to be greater than the minimum distance from the middle position of the positive electrode plate 222 to an end of the positive electrode plate 222. This is to ensure that the lithium released from the positive electrode plate 222 can be all intercalated into the negative electrode plate 221, preventing lithium precipitation of the negative electrode plate 221. If the difference L4 between the two is set to be too small, the lithium released from the positive electrode plate 222 may not be all intercalated into the negative electrode plate 221, and there is a risk of lithium precipitation of the negative electrode plate 221, which affects the safety of the battery 10. Therefore, L4 ≥ 300 µm is set to avoid lithium precipitation of the negative electrode plate 221, so as to reduce the risk of short circuit in the battery 10.

Optionally, in an embodiment of this application, L1 ≤ 330 µm.

The size of the burrs 2212 on the negative electrode current collector 2213 of the negative electrode plate 221 is set in relation to L2, L3, and L4. To reduce the possibility of the burrs 2212 on the negative electrode current collector 2213 lapping with the positive electrode plate 222, L1 ≤ 330 µm is set so as to reduce the risk of short circuit in the battery 10, thereby improving the safety of the battery 10.

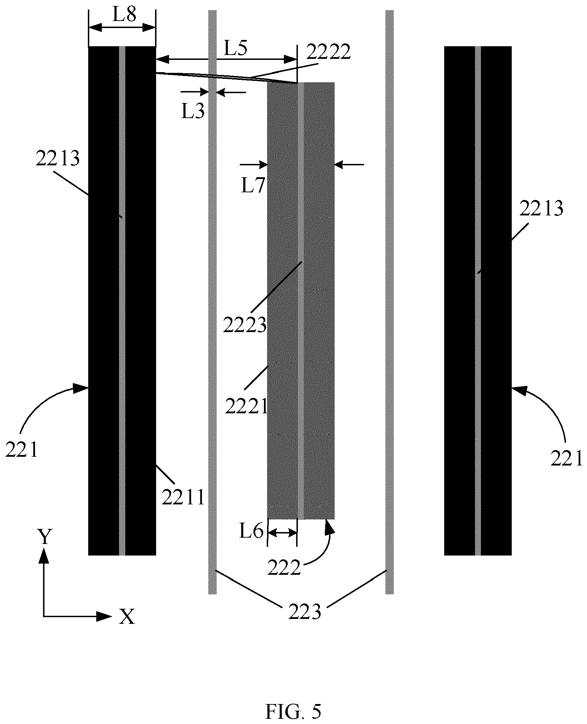

Optionally, in an embodiment of this application, as shown in FIG. 5, in the first direction x, the burrs 2222 on the positive electrode current collector 2223 of the positive electrode plate 222 has a size of L5, and the positive electrode active substance layer 2221 of the positive electrode plate 222 has a size of L6, where L5 < L3 + L6.

Specifically, the burrs 2222 on the positive electrode current collector 2223 may be measured by means of manual inspection or machine-assisted inspection. For example, the burrs 2222 on the positive electrode current collector 2223 may be measured using an image measuring instrument. Specifically, first, an image of the positive electrode plate 222 under detection is obtained; then based on the image information, coordinates of a point where the positive electrode current collector 2223 is connected to the burr 2222 on the positive electrode current collector 2223 are obtained, as well as coordinates of an end of the burr 2222 on the positive electrode current collector 2223 away from the positive electrode current collector 2223; and then the size of the burr 2222 on the positive electrode current collector 2223 is calculated based on the position information of the two coordinate points and the shape trajectory information of the burr 2222 on the positive electrode current collector 2223.

In the second direction y, the minimum distance from the middle position of the negative electrode plate 221 to an end of the negative electrode plate 221 is greater than the minimum distance from the middle position of the positive electrode plate 222 to an end of the positive electrode plate 222, and therefore the minimum size requirement for the burrs 2222 on the positive electrode current collector 2223 to lap onto the negative electrode plate 221 is that in the first direction x, the size L5 of the burrs 2222 on the positive electrode current collector 2223 is equal to a sum of the size L6 of the positive electrode active substance layer 2221 and the size L3 of the separator 223. Therefore, under a condition that L5 satisfies L5 < L3 + L6, it is less likely that the burrs 2222 on the positive electrode current collector 2223 lap with the negative electrode plate 221, reducing the risk of short circuit in the battery 10.

Optionally, in an embodiment of this application, L6 is 25 µm to 200 µm.

The performance of the battery 10 is related to the capacity of the positive electrode active substance layer 2221, that is, related to the thickness of the positive electrode active substance layer 2221. If the positive electrode active substance layer 2221 is too thin, fewer lithium ions are provided, and accordingly the capacity of the battery 10 is small. If the positive electrode active substance layer 2221 is too thick, the size of the positive electrode plate 222 is increased, increasing the volume of the battery 10. In addition, excessive positive electrode active substance leads to lithium precipitation of the negative electrode plate 221, affecting the safety of the battery 10. Therefore, the size L6 of the positive electrode active substance layer 2221 of the positive electrode plate 222 in the first direction x is set to 25 µm to 200 µm.

Optionally, in an embodiment of this application, L5 < 30 µm.

The size of the burrs 2222 on the positive electrode current collector 2223 of the positive electrode plate 222 is set in relation to L3 and L6. To reduce the possibility of the burrs 2222 on the positive electrode current collector 2223 lapping with the negative electrode plate 221, L5 < 30 µm is set so as to reduce the risk of short circuit in the battery 10.

Optionally, in an embodiment of this application, as shown in FIG. 5, in the first direction x, the size L7 of the positive electrode plate 222 is 70 µm to 400 µm.

Considering the size settings of the positive electrode active substance layer 2221 of the positive electrode plate 222 and the separator 223, the overall size L7 of the positive electrode plate 222 in the first direction x is set to be 70 µm to 400 µm, balancing the performance requirements of the battery 10 and the size settings of the battery 10.

Optionally, in an embodiment of this application, still referring to FIG. 5, in the first direction x, the size L8 of the negative electrode plate 221 is 70 µm to 400 µm.

Considering the size settings of the negative electrode active substance layer 2211 of the negative electrode plate 221 and the separator 223, the overall size L8 of the negative electrode plate 221 in the first direction x is set to be 70 µm to 400 µm, balancing the performance requirements of the battery 10 and the size settings of the battery 10.

The sizes in the embodiments of this application may be measured by means of manual inspection or machine-assisted inspection. For example, the sizes may be measured with an image measuring instrument, an X/β-ray microspot surface densitometer, a laser thickness gauge, and the like. This is not limited in this application.

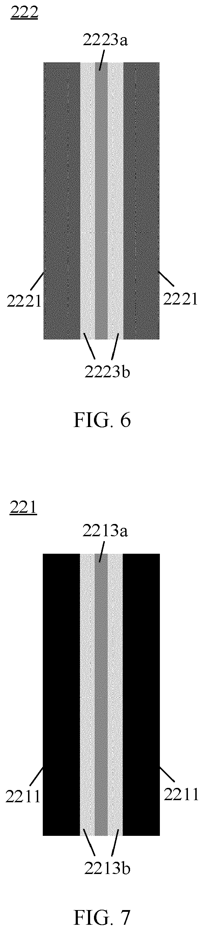

Optionally, in the embodiments of this application, the positive electrode current collector 2223 of the positive electrode plate 222 may be a composite substrate. For example, as shown in FIG. 6, the positive electrode current collector 2223 of the positive electrode plate 222 includes a first support layer 2223a and a first metal layer 2223b disposed on surface of the first support layer 2223a, and a surface of the first metal layer 2223b away from the first support layer 2223a is covered with the positive electrode active substance layer 2221.

Optionally, the material of the first support layer 2223a may be an insulating material or a non-insulating material, for example, it may be a polymer composite material (such as a PP-PET composite material), a carbon material, and the like, and this is not limited in this application. The first support layer 2223a is provided to appropriately increase the thickness of the composite substrate positive electrode current collector 2223 to improve the structural strength of the positive electrode plate 222.

A composite substrate is used as the positive electrode current collector 2223. Thickness of a metal layer of the composite substrate is 10% to 40% of thickness of a metal layer of a pure metal substrate. As a result, size of burrs on the composite substrate positive electrode current collector 2223 is only 10% to 40% of size of burrs on a pure metal substrate positive electrode current collector 2223, reducing the risk of the burrs on the positive electrode current collector 2223 lapping with the negative electrode plate 221. In addition, conductive resistance of the burrs on the composite substrate positive electrode current collector 2223 is 2.5 to 10 times conductive resistance of burrs on the pure metal substrate positive electrode current collector 2223, and heat generated due to the burrs on the composite substrate positive electrode current collector 2223 lapping with the negative electrode plate 221 is 10% to 40% of heat generated due to burrs on the pure metal substrate positive electrode current collector 2223lapping with the negative electrode plate 221, reducing the risk of thermal runaway in the battery 10.

Optionally, in an embodiment of this application, the negative electrode current collector 2213 of the negative electrode plate 221 may be a composite substrate. For example, as shown in FIG. 7, the negative electrode current collector 2213 of the negative electrode plate 221 includes a second support layer 2213a and a second metal layer 2213b disposed on surface of the second support layer 2213a, where a surface of the second metal layer 2213b away from the second support layer 2213a is covered with the negative electrode active substance layer 2211.

Optionally, the material of the second support layer 2213a may be an insulating material or a non-insulating material, for example, it may be a polymer composite material (such as a PP-PET composite material), a carbon material, and the like, and this is not limited in this application. The second support layer 2213a is provided to appropriately increase the thickness of the composite substrate negative electrode current collector 2213 to improve the structural strength of the negative electrode plate 221.

A composite substrate is used as the negative electrode current collector 2213. Thickness of a metal layer of the composite substrate negative electrode current collector 2213 is 10% to 40% of thickness of a metal layer of a pure metal substrate negative electrode current collector 2213. As a result, size of burrs on the composite substrate negative electrode current collector 2213 is only 10% to 40% of size of burrs on the pure metal substrate negative electrode current collector 2213, reducing the risk of the burrs on the negative electrode current collector 2213 lapping with the positive electrode plate 222. In addition, conductive resistance of the burrs on the composite substrate negative electrode current collector 2213 is 2.5 to 10 times conductive resistance of burrs on the pure metal substrate negative electrode current collector 2213, and heat generated due to the burrs on the composite substrate negative electrode current collector 2213 lapping with the positive electrode plate 222 is 10% to 40% of heat generated due to burrs on the pure metal substrate negative electrode current collector 2213 lapping with the positive electrode plate 222, reducing the risk of thermal runaway in the battery 10.

An embodiment of this application further provides a battery cell 20. The battery cell 20 may include the electrode assembly 22 in the foregoing embodiments, a housing having an opening for accommodating the electrode assembly 22, and an end cover for closing the opening of the housing.

An embodiment of this application further provides a battery 10, where the battery 10 may include the battery cell 20 in the foregoing embodiments. In some embodiments, the battery 10 may further include other structures such as a box and a busbar. Details are not described herein.

An embodiment of this application further provides an electric device, where the electric device may include the battery 10 in the foregoing embodiments. Optionally, the electric device can be a vehicle 1, ship, spacecraft, or the like, which is not limited in the embodiment of this application.

Although this application has been described with reference to some preferred embodiments, various modifications to this application and replacements of the components therein with equivalents can be made without departing from the scope of this application. In particular, as long as there is no structural conflict, the various technical features mentioned in the embodiments can be combined in any manner. This application is not limited to the specific embodiments disclosed in this specification but includes all technical solutions falling within the scope of the claims.

## Claims

1. An electrode assembly, **characterized by** comprising:
a negative electrode plate (221), a positive electrode plate (222), and a separator (223), wherein the negative electrode plate (221), the positive electrode plate (222), and the separator (223) are stacked along a first direction (x), and the separator (223) is used to separate the positive electrode plate (222) and the negative electrode plate (221); wherein
in a second direction (y), size of the negative electrode plate (221) is larger than size of the positive electrode plate (222), and an orthographic projection of the positive electrode plate (222) on a plane in which a surface of the negative electrode plate (221) is located does not extend beyond the negative electrode plate (221), wherein the second direction (y) is a width direction of the negative electrode plate (221), and the first direction (x) is perpendicular to the second direction (y); and
in the first direction (x), burrs on a negative electrode current collector (2213) of the negative electrode plate (221) have a size of L1, a negative electrode active substance layer (2211) of the negative electrode plate (221) has a size of L2, and the separator (223) has a size of L3, and in the second direction (y), a difference is L4 between a minimum distance from a middle position of the negative electrode plate (221) to an end of the negative electrode plate (221) and a minimum distance from a middle position of the positive electrode plate (222) to an end of the positive electrode plate (222); wherein
L1, L2, L3, and L4 satisfy L1 ≤ L2 + L3 + L4.

2. The electrode assembly according to claim 1, **characterized in that** L2 is 25 µm to 200 µm.

3. The electrode assembly according to claim 1 or 2, **characterized in that** L3 ≥ 5 µm.

4. The electrode assembly according to any one of claims 1 to 3, **characterized in that** L4 ≥300 µm.

5. The electrode assembly according to any one of claims 1 to 4, **characterized in that** L1 ≤ 330 µm.

6. The electrode assembly according to any one of claims 1 to 5, **characterized in that** in the first direction (x), burrs on a positive electrode current collector (2223) of the positive electrode plate (222) have a size of L5 satisfying L5 < L3 + L6; wherein
L6 represents size of a positive electrode active substance layer (2221) of the positive electrode plate (222) in the first direction (x).

7. The electrode assembly according to claim 6, **characterized in that** L6 is 25 µm to 200 µm.

8. The electrode assembly according to claim 6 or 7, **characterized in that** L5 <30 µm.

9. The electrode assembly according to any one of claims 1 to 8, **characterized in that** in the first direction (x), the positive electrode plate (222) has a size L7 of 70 µm to 400 µm.

10. The electrode assembly according to any one of claims 1 to 9, **characterized in that** in the first direction (x), the negative electrode plate (221) has a size L8 of 70 µm to 400 µm.

11. The electrode assembly according to any one of claims 1 to 10, **characterized in that** the positive electrode current collector (2223) of the positive electrode plate (222) comprises a first support layer (2223a) and a first metal layer (2223b) disposed on surface of the first support layer (2223 a), wherein a surface of the first metal layer (2223b) away from the first support layer (2223 a) is covered with the positive electrode active substance layer (2221).

12. The electrode assembly according to any one of claims 1 to 11, **characterized in that** the negative electrode current collector (2213) comprises a second support layer (2213a) and a second metal layer (2213b) disposed on surface of the second support layer (2213a), wherein a surface of the second metal layer (2213b) away from the second support layer (2213a) is covered with the negative electrode active substance layer (2211).

13. A battery cell, **characterized by** comprising:
the electrode assembly according to any one of claims 1 to 12;
a housing having an opening for accommodating the electrode assembly; and
an end cover for closing the opening.

14. A battery, **characterized by** comprising the battery cell according to claim 13.

15. An electric device, **characterized by** comprising the battery according to claim 14, wherein the battery is configured to supply electrical energy.
